# EUROPEAN PATENT SPECIFICATION

(11) **EP 0 607 628 B1**
(45) Date of publication and mention of the grant of the patent: **17.12.1997**
(21) Application number: 93202946.5
(22) Date of filing: 21.10.1993
(51) Int. Cl.: D06F 39/00, A47L 15/42

(54) **A washing machine or dishwasher with liquid storage**
Wasch- oder Geschirrspülmaschine mit Flüssigkeitspeicher(ung)
Machine à laver le linge ou la vaisselle avec stockage du liquide

(30) Priority: 19.01.1993 IT MI930065
(43) Date of publication of application: 27.07.1994
(73) Proprietor: CANDY S.p.A., I-20052 Monza (Milano) (IT)
(72) Inventor: Fumagalli, Silvano, I-20052 Monza (Milan) (IT)
(74) Representative: Falcetti, Carlo

(56) References cited:
- EP-A- 0 287 990
- EP-A- 0 449 060
- EP-A- 0 463 576
- DE-A- 2 754 254
- DE-A- 2 910 140
- DE-A- 4 104 450
- FR-A- 2 289 658
- GB-A- 2 151 263

## Description

The present invention relates to a washing/drying machine or a dishwasher, with liquid storage which, by recovering the washing water, achieves significant savings in water consumption and also considerable savings in the consumption of detergents or salts for regenerating the water-softening resin.

It is known that domestic washing machines consume large amounts of water and detergents, although considerable progress has been made in increasing their efficiency and economy in operation.

At the moment, the average water consumption for a complete washing cycle is between 70 and 80 litres in total, which is already a much lower value than the previous standard.

Even for the drying operation, although the water consumption has been reduced as a result of the improvement of condensation systems, it remains on average high, around 30/40 litres so that 120 litres of water are required, on average, to complete the washing and drying cycles and the treatment of a standard 5 kg load of washing.

As is known, as final stages, washing processes provide for one or more rinsing operations for which a total volume of the order of 30/40 litres of cold water is drawn from the water mains.

The rinsing water which, during the last rinsing operations is practically clean, is discharged into waste collection systems and is lost.

In the case of washing/drying machines, this loss is added to that of the cooling water which is passed through a condenser in order to condense the steam developed by the drying operation, and which is then discharged.

The volume wasted is of the order of 30/40 litres.

To this loss is added that of the water condensed from the steam which, although its volume is relatively small in comparison with those mentioned above, may be considered valuable, mineral-free distilled water.

Dishwasher rinsing water has similar characteristics; it is not only practically clean but, since it is supplied through a softening resin filter, it is also decalcified.

Another considerable disadvantage of washing machines is constituted by their energy consumption; the washing water, which is admitted directly from the water mains and which is therefore at a temperature at least ten degrees centigrade or so below the ambient temperature, has to be heated to a temperature of 60°C or more for the washing operations.

The heating is achieved by electrical resistances and hence by the conversion of valuable energy.

If water were available at least at ambient temperature (20-25°C) or at a higher temperature, a considerable reduction in this consumption would be possible.

For pressing ecological reasons and reasons of economy in operation, it is necessary to take account jointly of all the causes which contribute to consumption, particularly the consumption of water, of electricity for heating, of detergents, and of additional softening products which in turn contribute to the running costs and result in deterioration of the environment.

It is therefore desirable to have washing/drying machines and dishwashers which reduce pollution, the consumption of water, detergents and also, to a certain extent, electrical energy and, finally, which reduce running costs.

It is already known from FR-A-2,288,658; EP-A-0,287,990 and DE-A-4104450 to provide a washing machine with a reservoir for recovery of rinsing water, which is subsequently reused in another washing operation.

It is also known from FR-A-2,289,658 to use the recovered water as a cooling fluid in a laundry dryer, the condensation water and the cooling fluid being disposed with consequent wasting of water particularly valuable for its thermal content and its low hardness. This prior art forms the preamble of independent claim 1.

These limitations are overcome by the washing/drying machine or dishwasher of the present invention where a storage reservoir enables the washing water, particularly the rinsing water, to be recovered for subsequent re-use in washing operations.

Moreover the recovered rinsing water in the storage reservoir is used as the cooling fluid for condensing the steam from the drying operation and is recovered again, together therewith, thus achieving the dual effect of reducing hardness and of heating the recovered water which, when re-used in a subsequent washing cycle achieves savings in the consumption of detergents and of heating energy.

According to a further aspect of the present invention, the storage reservoir is suitably insulated so as to prevent heat loss from the recovered water.

According to a further aspect of the present invention, the storage reservoir is supplied by the draining pump of the washing machine and is disposed in the washing machine, in relation to the washing tank, in a manner such that it can supply the washing tank by gravity without the need for auxiliary pumping devices.

This object is solved by the features of independent claim 1.

To advantage, the present invention may also be used in washing machines with recirculated flow and with dynamic washing cycles of the type described, for example, in the Applicant's Italian patent No. MI92A002562 filed on 9/11/1992, with cumulative savings of water and detergent.

The characteristics and advantages of the invention will become clearer from the following description of a preferred embodiment and from the appended drawings in which:
Figure 1 is a schematic, sectioned, front view of a preferred embodiment of a washing and drying machine with liquid storage according to the present invention,
Figure 2 is a schematic vertical section of the washing machine of Figure 1 taken in several section planes,
Figure 3 is a schematic vertical section of a variant of the washing machine of Figure 1, taken in several section planes,
Figure 4 is a schematic vertical section of a dishwasher with liquid storage formed according to the present invention.

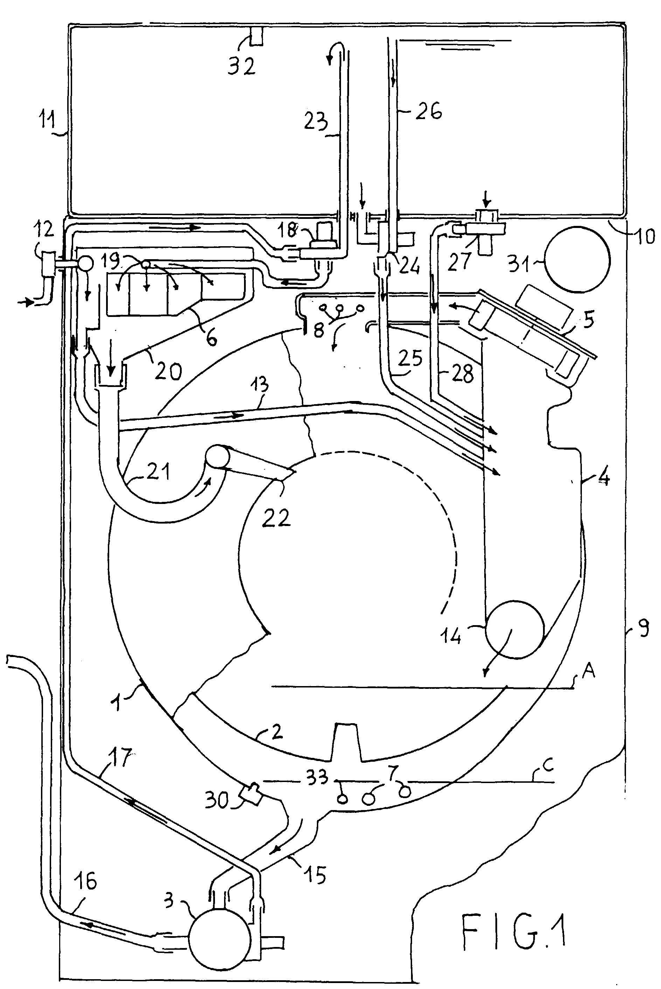

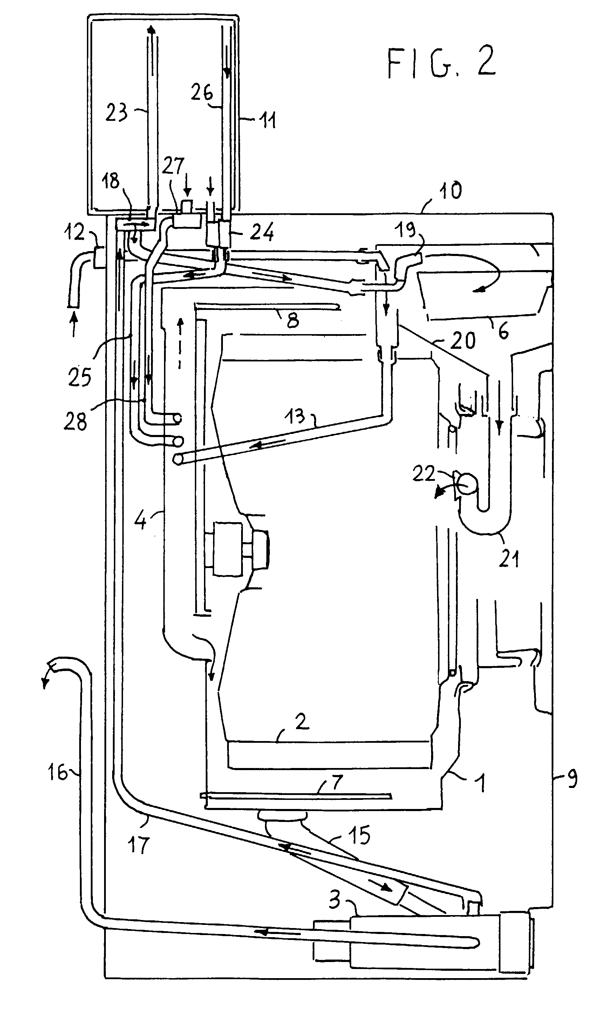

With reference to Figures 1 and 2, the washing/drying machine of the invention comprises a washing tank 1 containing a washing drum 2, a filter-pump-diverter 3 of the type described, for example, in patent application No. MI92A002597 filed on 12/11/1992, a condenser 4 with a suction-fan-motor unit 5, a detergent holder 6, a first set of elements 7 for heating the washing water, a second set of drying heating elements 8, and a plurality of connecting pipes and control valves which will be considered further below.

The various elements are housed in a casing 9, preferably of standard dimensions, with a clear top surface 10.

A collecting reservoir 11 is installed on the clear top surface.

A connection to the water mains, controlled by a valve 12, supplies the washing machine with a flow of water which passes through a pipe 13 admitting it to the condenser 4, and is poured into the tank 1 of the washing machine through an outlet opening 14 of the condenser.

The levels to which the washing machine is filled are controlled, in known manner, by means of one or more level sensors 30.

The liquid in the tank is drawn through an outlet 15 by the filter-pump-diverter unit 3 and, according to the state of the diverter, is forced into a drain pipe 16 or into a recirculating pipe 17 from where it is sent through a diverter valve 18 to the detergent holder, where it is discharged into one of a plurality of compartments of the holder 6 through a nozzle 19 which is orientable in known manner.

The recirculated flow collects the detergent selectively from one of the various compartments and is discharged into the drum of the washing machine through a manifold box 20, a siphon 21 and a spray nozzle 22.

When activated in an appropriate manner, the diverter valve 18 enables the water which is in the washing tank 1 and is admitted to the recirculation pipe 17 to be transferred into the reservoir 11 through a filler 23.

The liquid admitted to the storage reservoir 11 can be drained into the condenser 4 through a valve 24 with two inlets, and a pipe 25, and from there into the washing tank 1.

One inlet of the valve 24 is connected to an overflow pipe 26 housed in the reservoir 11.

In the rest condition, the valve 24 connects the pipe 26 to the pipe 25, ensuring that the level to which the tank is filled does not exceed a maximum safety level.

When the valve 24 is activated, the second inlet of the valve, which is connected to the bottom of the reservoir 11, empties the tank.

A simple valve 27 connecting the reservoir 11 to the condenser 4 by means of a pipe 28 may be used instead of the two-way valve 24, as shown in Figure 1 and, in this case, the overflow pipe 26 can be connected directly to the pipe 28 or to the separate pipe 25 in order to admit the overflow liquid to the condenser 4.

The volume of the reservoir is preferably of the order of 15 litres so as to ensure that it can hold 10-12 litres of water, which corresponds to the quantity normally used for a rinsing operation, plus a suitable additional quantity of the order of 2.5/3 litres corresponding to the condensed water produced during a drying cycle.

The operation of the washing/drying machine of Figures 1, 2 is very simple.

The washing tank 1 may be filled, in known manner, at least the first time the washing machine is used, by water drawn from the water mains by means of the valve 12. This operation also achieves a first washing of the condenser 4.

The prescribed filling level A is determined by the sensor 20 which sends a measurement signal to programming and control devices 31 of known type which may be electromechanical or electronic.

The filling water, which is heated by the elements 7 to a predetermined temperature detected by a sensor 33, is recirculated through a recirculation pipe 17, the valve 18 and the nozzle 19 so as to collect the necessary detergent from the holder 6.

The washing liquid obtained is re-admitted to the tank through the siphon 21 and the nozzle 22 and is recirculated continuously, thereby increasing washing efficiency.

Further detergent may be collected in the course of the washing with recirculation.

At the end of the washing stage, the dirty liquid is discharged from the tank through the drain pipe 16.

Further steps follow, for example, a further filling and collection of softening substances, upon completion of which one or more rinsing stages begin.

With the last rinsing stage, the water which, again, is drawn from the water mains at a temperature of the order of 10°C is admitted to the tank through the pipe 13 and the condenser 4, which it cleans, but upon completion of the rinsing operation instead of being discharged through the pipe 16, it is sent through the recirculation pipe 17 and, by the operation of the valve 18, is stored in the reservoir 11.

The recovery operation also continues during the subsequent spinning step, unless the reservoir 11 is already full to a predetermined level detected by suitable sensors 32, in which case, the excess liquid is discharged through the pipe 16.

The water stored in the reservoir 11 is practically clean and is characterised by hardness corresponding to that of the water supply which, on average, measured in degrees French, is of the order of 10°F.

A degree French corresponds to a salts content equivalent to 0.01 gr of CaCO₃ per m³ of water.

The spinning operation reduces the quantity of water absorbed by the fabrics but, even with rapid spinning, does not achieve complete drying.

The average residual water content is of the order of 2.5 kg for a washing load with a dry weight of 5 kg.

The subsequent drying operation removes this water content in the following manner.

The fan-motor unit 5 and the heating elements 8 are set in operation, causing an air flow to be drawn from the washing tank through the opening 14 of the condenser 4. The air, which is heated by the elements 8, is blown back into the tank 1.

The hot air-flow passes over and through the washing drum, heating the wet load in the drum, which is rotated slowly, causing some of the absorbed water to evaporate.

The damp air produced is drawn into the condenser 4.

In conventional washing machines, the condenser 4 is sprayed with a sprinkled contraflow of cold water drawn from the water mains, which wets the walls of the condenser and, as it comes into contact with the steam, causes it to condense.

The cooling flow falls into the tank 1 together with the condensate flow and is drawn in by the pump 3 and discharged through the pipe 16.

According to the invention, however, the cooling flow is drawn from the reservoir 11 by the operation of the valve 24 (or 27), is sent into the condenser 4, collected in the tank 1 and re-admitted to the reservoir 11, together with the condensate flow, by the pump 3.

The water in the reservoir 11 is recirculated several times until the water content of the load is reduced to optimal conditions for subsequent ironing which, by way of indication, is equal to 0.3-0.5 kg per load.

Naturally, more thorough drying can be programmed.

In the course of the drying process, two phenomena occur; the heat of condensation of the steam is yielded to the cooling fluid which is heated and the liquid condensed from the steam, which has zero hardness, is mixed with the cooling liquid, reducing its hardness.

An undesired effect also present in conventional washing machines is that a fraction of the condensation water and, in the case of condensers in which the cooling fluid is in direct contact with the steam, also a fraction of the cooling water, is drawn in mechanically in nebulized form.

When this water is brought into contact with the heating elements it is transformed into steam which has to be recondensed.

In practice, this effect increases the quantity of water vapourized, and the corresponding energy consumption, by about 5%.

In theory, the heat of condensation developed could boil a volume of 10 litres of cooling water.

In practice, because of the inevitable loss of heat from the condenser, the tank 1, the filter-pump-diverter unit, the pipes for recirculating the cooling fluid and the reservoir 11, the heating is more limited, to a temperature of the order of about 50°C, also for a quantity of cooling water of the order of 10 litres.

Moreover, in order to keep this heating within permissible limits, even if heat loss is minimal, the reservoir 11 may naturally be dimensioned for recovering a larger volume of rinsing water or, as will be explained in detail below, some of the hot rinsing water in the reservoir 11 may be replaced by cold water brought in from the water mains, although this approach limits the savings of water, energy and detergent which can be achieved.

As already indicated, the other effect achieved is the decalcification of the water recovered, the hardness of which is reduced by about 6-7° and brought to about 23°.

Clean, warm and partially decalcified water is therefore available in the reservoir 11 and can be re-used for a subsequent washing cycle.

Even if the subsequent washing cycle is postponed for hours or days, the heat content of the water in the storage reservoir is not entirely lost since the temperature of the water will fall to ambient temperature (20°C-25°C) asymptotically.

Moreover, the reservoir 11 may be suitably insulated so as to retain the heat content of the stored liquid for one or more days, if not for weeks.

Finally, it may be envisaged that the market, or a sector of the market, will develop towards washing machines with more limited loading capacities (3kg instead of 5kg) for use predominantly for carrying out two or more successive combined washing/drying operations with considerable savings of electrical energy and liquid.

The saving of detergent is also significant; the detergent manufacturers suggest that the optimal detergent requirement for a standard 5 kg load with water hardness of 30° is of the order of 140 gr. For hardness of between 15° and 25°, the recommended reduction is about 40 gr, with a considerable saving.

Once the reservoir 11 is filled with recovered water, the subsequent washing operations take place with the activation of the valve 24 (or 27) instead of the valve 12.

The tank is filled with recovered water which is heated, if necessary, in order to supplement its heat content and raise its temperature to a predetermined value.

The softened water loaded is then recirculated in order to collect the detergent which, conveniently, is measured out according to the lower hardness.

In conclusion, there are considerable water savings of 40-50 litres for a total of 120, partially as a result of the recovery of the rinsing water (10 litres) and partially as a result of the use of recovered water instead of the cooling water (30-40 litres), as well as considerable energy savings for the heating of the washing water (from 0.4 to 2 kw hours, according to the residual temperature of the recovered water) and considerable savings in detergent (40 g per load).

Clearly, the embodiment described constitutes only a preferred embodiment, and the dimensioning of the recovery reservoir and the operating methods used, which can be programmed according to the user's specific requirements, can make possible and give preference to some aspects of the saving.

For example, a reservoir dimensioned for holding 25 litres of water can enable the water from one or two rinsing operations to be recovered (possibly according to the user's selection), and a drying step carried out in two stages, one delayed with respect to the other, or with a slow cycle, so that the recovered water can cool by heat dissipation, can achieve a greater reduction in hardness.

Finally, where considerations of size do not allow the installation of a recovery reservoir of sufficient capacity, some of the rinsing water can be recovered and the washing tank can be filled up with a supplement from the mains.

A similar supplement may be introduced during the drying operation by the replacement of some of the recirculation water, which is too hot and is discharged, by cold water from the mains.

In this connection, it is appropriate to provide further details; the drying and recirculation of the cooling water may be controlled by the programmer 31 by the intermittent operation of the pump 3 to ensure that a minimum level C of cooling and condensation water output from the condenser 4 is present in the tank.

The temperature of this water is detected by the sensor 33 and is sent to the programming and control device 31 which is preferably electronic.

When the temperature detected by the sensor 33 exceeds a predetermined value, for example 55°C, the programming and control device 31 operates the pump-diverter unit 3 for a predetermined period of the order of a few minutes so as to drain the cooling flow from the condenser 4, through the pipe 16.

The flow rate of the cooling liquid is determined with sufficient precision by the hydrostatic head applied by the liquid present in the reservoir to the outlet nozzle at the end of the pipe 25 (or 28), and by the outlet section of the nozzle.

The discharge from the reservoir of a predetermined quantity of liquid, for example 3 litres, which is equal to about 25% of the liquid recovered (rinsing water and condensation water) can thus be controlled with sufficient precision, in dependence on the discharge time.

Immediately afterwards, an equivalent volume of cold water (at about 10°C) may be admitted from the mains to the condenser and from there to the tank 1, by the operation of the valve 12.

The volume admitted may be controlled by the programmer 31 by means of the level sensor 30 (possibly with several successive doses to avoid wetting the washing in the drum 2) and can be sent back to the reservoir 11 to supplement the liquid therein, the temperature of which is reduced by 10°C or more, upon the hypotheses made.

It is worth noting that the temperature of the liquid in the reservoir 11 and the supplementing thereof may be controlled with the use of sensors such as the sensors 30 and 33 which are normally already present in washing machines, without the need for additional sensors, although there is nothing to prevent the use of additional sensors. It is necessary simply to bear in mind that the temperature of the cooling water output from the condenser is a few degrees centigrade (from 10 to 20°C) higher than that in the reservoir 11.

The arrangement of the recovery reservoir on top of the body of the washing machine is shown in Figures 1 and 2 purely by way of example and technological progress has enabled the production of washing machines which are more and more compact for the same load capacity, also enabling the production of washing machines which have recovery reservoirs and can also be "built in" beneath a work surface disposed at a standard height of 85 cm, with a depth of 60 cm and a width of no more than 60 cm.

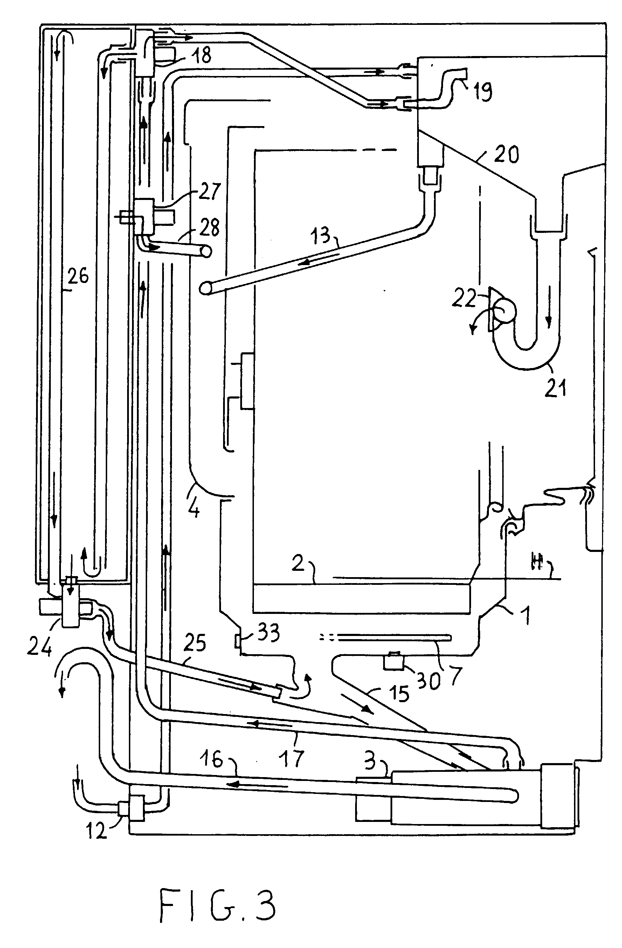

Figure 3 is a schematic vertical section similar to Figure 2, showing a washing/drying machine of this type.

In Figure 3, the elements which are functionally equivalent to those shown in Figure 1 have the same reference numerals.

In this embodiment, the reservoir 11 is installed behind the body of the washing machine and extends downwards to a level H which is no lower than the maximum level to which the washing tank 1 is filled.

This ensures that the reservoir 11 is emptied completely in order to fill the washing tank.

As in Figure 1, the drain valve 24 opens in the bottom of the reservoir 11 but, unlike the embodiment of Figure 1, the pipe 25 is preferably connected to the outlet 15.

In this case, in order to ensure a cooling flow to the condenser 4, in addition to the valve 24 and the pipe 25 it is essential to provide a valve 27 and a pipe 28 for sending the cooling flow to the condenser.

The pipe 28 opens into the condenser at a level below than to which the reservoir 11 is filled but above the the level of the condenser 4, so as to ensure a hydrostatic head which causes a flow from the reservoir towards the condenser.

In order to prevent the volume of liquid in the reservoir 11 from becoming stratified according to its temperature, the recirculation flow is admitted to the reservoir 11 through an inverted siphon pipe which sends the filling flow to the bottom of the reservoir.

The foregoing description refers to a washing/drying machine as being the machine which best achieves the advantages indicated above but, clearly, the invention can also be applied with substantial benefits to washing machines without drying devices.

It can also be applied to dishwashers.

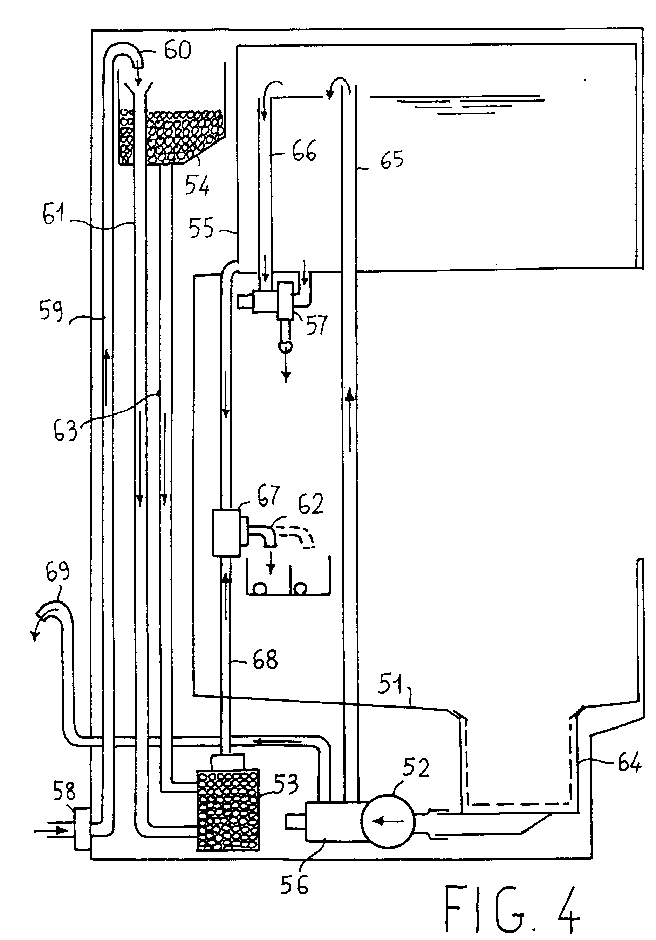

Figure 4 shows schematically and sectioned in several section planes, a dishwasher with a storage reservoir according to the present invention.

The dishwasher comprises a washing tank 51, a pump 52, a resin softening filter 53, a container 54 for regenerating salts and suitable connecting pipes and control valves.

According to the invention it also comprises a recovery reservoir 55, a drain-flow diverter 56 and a valve 57 for draining the reservoir 55.

A filler valve 58 controls the drawing of water from the water mains.

The filling water is conveyed as far as the regenerating salt container 54 by the pipe 59 and, according to the orientation of an outlet nozzle 60, is transferred, through a pipe 61, bypassing the regenerating container, to the softening filter 53 from where it is admitted to the washing tank through a pipe 68.

It is preferably admitted to the washing tank from the pipe 68 through an orientable nozzle 62 in order to collect detergent from a detergent-holder with one or more compartments.

When the nozzle 60 is in a "regeneration" position, the filling water is poured into the container 54, dissolving regenerating salts, and the solution formed is sent through the pipe 63 to the filter 53 the resin of which is regenerated.

The nozzle 60 and the container 54 are in raised positions relative to the level of the washing tank in order to ensure a suitable hydrostatic head in the pipes 61-63 to compensate for the flow resistance caused by the filling water flowing through the pipes and, in particular, through the filter 53.

This measure is adopted in order to avoid having members operating at water mains pressure downstream of the valve 58, whilst ensuring the necessary flow of liquid by gravity and in order to have a standard safety air-gap which can also make use of systems integrated in a single container.

The water in the washing tank, which is filtered by a tray 64 for collecting solid residues, is recirculated to a plurality of spray nozzles, not shown, by a pump, not shown, with a suitable head.

A second pump 52 connected to the tray 64 enables the washing or rinsing water to be drained through the diverter 56.

When it is activated, the diverter 56 sends the rinsing liquid through the pipe 65 to the storage reservoir 55 instead of sending it to the drain 69.

The valve 57 with two inlets enables the liquid stored in the reservoir 55 to be drained from the reservoir into the washing tank.

When the valve 57 is de-activated, it opens an overflow pipe 66 of the reservoir 55 towards the washing tank.

A second valve 67 with two inlets, disposed in the inlet pipe 68, has an inlet which opens into the reservoir 55 and, when activated, enables the liquid in the reservoir to flow from the nozzle 62, collecting detergent.

The operation of the dishwasher of Figure 4 is similar to that of the washing machines.

Whereas the washing water, which has been softened by passing through the filter 53 but which is dirty, is discharged by the pump 52, the rinsing water, which is also softened but is practically clean, is sent into the reservoir 55 by the pump 52 and by the diverter 56 which is activated as appropriate.

It can be drawn therefrom by the activation of the valve 67 (or the valve 57) and drained into the tank 51 for a subsequent wash, achieving a saving of water and less utilization of the softening resin which results in a saving in regenerating salts.

Moreover, as in the case of the washing machines, the dishwasher may have drying devices with the associated problems of the dissipation of the liquid condensed and of the cooling liquid from the condenser.

According to the invention, the cooling liquid may be replaced by the recovered liquid accumulated in the reservoir 55 by devices similar to those already described and the condensed water can be recovered achieving beneficial savings in energy consumption.

In this case, it is not generally necessary to supplement/partially replace the recovered water with cold water from the water mains because, since crockery does not become impregnated with water, the volume of water to be evaporated is much smaller and much less than a litre.

Even a reservoir 55 with a smaller capacity of the order of 5 litres, provides an adequate reserve of liquid to supply the condenser with cooling fluid.

The foregoing description relates solely to some preferred embodiments of the invention to which many variations may be introduced.

For example, the two-way flow diverter incorporated in the filter-pump-diverter unit 3 and the two-way diverter valve 18 may be replaced by a single diverter element with three outlets, disposed downstream of the draining and recirculating pump.

## Claims

1. A washing and drying machine or dishwasher comprising a washing tank (1) which is intended to be filled with liquid to a predetermined level (A), means (12) for admitting water to the tank, a draining pump (3), and a pipe (15) for connecting the tank to the inlet of the pump, a reservoir (11), disposed above the predetermined level (A), for recovering the liquid in the tank, flow-diverting means (3,18) connected to the output of the pump (3) for switching the flow output by the pump selectively from an outlet (16) to the reservoir (11), a drain valve (24,27) for connecting the reservoir (11) to the washing tank (1), drying devices (8,5), a condenser (4) for the steam developed by the devices (8,5), and supply means (24,27,25,28) for supplying the condenser (4) with a condensation cooling flow taken from the reservoir (11), characterised in that the cooling flow is discharged from the condenser (4) into the tank (1), mixed with condensed water and said washing and drying machine or dishwasher further comprises programming means (31) for coordinating the activation of the flow-diverting means (3,18), of the pump (3), of the drain valve (24,27) and of said supply means (24,27,25,28) in order to supply the condenser with said condensation cooling flow taken from said reservoir (11) and to recirculate said cooling flow mixed with condensed water from said tank (1) to said reservoir (11) for recovery therein and further subsequent reuse in a subsequent washing operation.

2. A washing and drying machine or dishwasher according to Claim 1, in which the flow-diverting means (3,18) switches the output flow of the pump (3) selectively towards an outlet (16), towards the reservoir (11), or towards a recirculation path (17,19,21) leading into the tank.

3. A washing and drying machine or dishwasher according to Claim 2, in which the flow-diverting means (3,18) comprises a first diverter (3) for selectively switching the output flow from the pump (3) towards the outlet (16) and the recirculation path (17) and a second diverter (18) inserted in the recirculation path (17) for selectively switching a recirculating flow towards the reservoir (11) or towards the tank (1).

4. A washing and drying machine or dishwasher according to Claim 1, in which the supply means (24,27,25,28) comprises the drain valve (24,27) and a supply pipe (25,28) leading into the condenser (4).

5. A washing and drying machine or dishwasher according to Claim 1, in which the supply means comprise a control valve (27) in addition to the drain valve (24) and a supply pipe (28) leading into the condenser.

6. A washing and drying machine or dishwasher according to Claim 1, comprising means (33) for detecting the temperature of the cooling flow, the programming means (31) supplementing the cooling flow with water admitted to the tank from the inlet means (12) when the temperature detected by the detection means exceeds a predetermined temperature.

7. A washing and drying machine or dishwasher according to Claim 6, in which the temperature detection means (33) is disposed in the bottom of the tank.

8. A washing and drying machine or dishwasher according to the preceding claims, comprising means (32) for detecting the liquid level in the reservoir in order to activate the programming means (31) to switch the flow-diverting means (3) at the outlet of the pump (3) towards the outlet (16) when the liquid level in the reservoir exceeds a predetermined value.

9. A washing and drying machine or dishwasher according to Claim 6, in which the detection means (33) monitors the temperature of the washing liquid in the tank in the course of a washing stage, and the temperature of the cooling liquid output by the condenser in the course of a drying stage.

10. A washing and drying machine or dishwasher according to the preceding claims, in which the reservoir (11) is disposed on top of the body of the washing machine.

11. A washing and drying machine or dishwasher according to the preceding claims, in which the reservoir (11) is disposed behind the body of the washing machine.

12. A washing and drying machine or dishwasher according to the preceding claims, comprising means for insulating the reservoir thermally.

13. A washing and drying machine or dishwasher according to the preceding claims, comprising overflow means (26) for discharging the excess liquid sent to the reservoir (11) into the tank (1).

14. A washing and drying machine or dishwasher according to Claim 13, in which the overflow means (26) is connected to an inlet of the drain valve (24), or of the control valve (27), the drain valve (24) or the control valve (27) being constituted by a diverter with two inlets, the normally open inlet of the diverter being connected to the overflow means (26).

## Patentansprüche

1. Wasch- und Trockenmaschine oder Geschirrspüler mit einem Waschbehälter (1), der dazu gedacht ist, bis zu einem vorgegebenen Niveau (A) mit einer Flüssigkeit gefüllt zu werden, Mitteln (12) zum Einlassen von Wasser in den Behälter; einer Entwässerungspumpe (3) und einem Rohr (15), um den Behälter mit dem Einlaß der Pumpe zu verbinden, einem Reservoir (11), das über dein vorgegebenen Niveau (A) angeordnet ist, um die Flüssigkeit in dem Behälter rückzugewinnen, strömungsverteilenden Mitteln (3, 18), die mit dem Auslaß der Pumpe (3) verbunden sind, um den Fluß, der von der Pumpe abgegeben wird, selektiv von einem Auslaß (16) zu dem Reservoir (11) umzuschalten, einem Entwässerungsventil (24, 27), um das Reservoir (11) mit dem Waschbehälter (1) zu verbinden, Trocknungsvorrichtungen (8, 5), einem Kondensator (4) für den Dampf, den die Vorrichtungen (8, 5) entwickeln, und Zufuhrmitteln (24, 27, 25, 28), um dem Kondensator (4) einen Kondensationskühlfluß zuzuführen, der aus dem Reservoir (11) entnommen wird, dadurch gekennzeichnet, daß der Kühlfluß von dem Kondensator (4) in den Behälter (1) ausströmt, gemischt mit kondensiertem Wasser, und die Wasch- und Trockenmaschine oder der Geschirrspüler des weiteren Programmiermittel (31) beinhaltet, um die Aktivierung der strömungsverteilenden Mittel (3, 18) der Pumpe (3), des Entwässerungsventils (24, 27) und der Zufuhrmittel (24, 27, 25, 28) zu koordinieren, um dem Kondensator den Kondensationskühlfluß zuzuführen, der dem Reservoir (11) entnommen wird. und den mit kondensiertem Wasser gemischten Kühlfluß von dem Behälter (1) zu dem Reservoir (11) zwecks Rückgewinnung in demselben und weiterer nachfolgender Wiederverwendung in einem nachfolgenden Waschvorgang rückzuführen.

2. Wasch- und Trockenmaschine oder Geschirrspüler nach Anspruch 1, wobei die strömungsverteilenden Mittel (3, 18) die Auslaßströmung der Pumpe (3) selektiv zu einem Auslaß (16), zu dem Reservoir (11) oder zu einem Rückführungspfad (17, 19, 21), der in den Behälter führt, umschaltet.

3. Wasch- und Trockenmaschine oder Geschirrspüler nach Anspruch 2, wobei die strömungsverteilenden Mittel (3, 18) einen ersten Verteiler (3), um die Auslaßströmung von der Pumpe (3) selektiv zu dem Auslaß (16) und dein Rückführungspfad (17) umzuschalten, und einen zweiten Verteiler (18) beinhalten. der in dem Rückführungspfad (17) eingefügt ist, um eine Rückführtingsströmung selektiv zu dem Reservoir (11) oder zu dem Behälter (1) umzuschalten.

4. Wasch- und Trockenmaschine oder Geschirrspüler nach Anspruch 1, wobei die Zufuhrmittel (24, 27, 25, 28) das Entwässerungsventil (24; 27) und ein Zufuhrrohr (25, 28) beinhalten, das in den Kondensator (4) führt.

5. Wasch- und Trockenmaschine oder Geschirrspüler nach Anspruch 1, wobei die Zufuhrmittel ein Steuerventil (27) zusätzlich zu dem Entwässertingsventil (24) und einem Zufuhrrohr (28) beinhalten, das in den Kondensator führt.

6. Wasch- und Trockenmaschine oder Geschirrspüler nach Anspruch 1, die/der Mittel (33) zum Detektieren der Temperatur des Kühlflusses beinhaltet, wobei die Programmiermittel (31) den Kühlfluß mit Wasser ergänzen, das von den Einlaßmitteln (12) in den Behälter eingelassen wird, wenn die Temperatur, die von den Detektionsmitteln detektiert wird, eine vorgegebene Temperatur übersteigt.

7. Wasch- und Trockenmaschine oder Geschirrspüler nach Anspruch 6, wobei die Temperaturdetektionsmittel (33) im Boden des Behälters angeordnet sind.

8. Wasch- und Trockenmaschine oder Geschirrspüler nach den vorhergehenden Ansprüchen, die/der Mittel (32) zum Detektieren des Flüssigkeitsniveaus in dem Reservoir beinhaltet, um die Programmiermittel (31) zum Umschalten der strömungsverteilenden Mittel (3) am Auslaß der Pumpe (3) zu dem Auslaß (16) zu aktivieren, wenn das Flüssigkeitsniveau in dem Reservoir einen vorgegebenen Wert übersteigt.

9. Wasch- und Trockenmaschine oder Geschirrspüler nach Anspruch 6, wobei die Detektionsmittel (33) die Temperatur der Waschflüssigkeit in dem Behälter im Verlauf einer Waschstufe und die Temperatur der Kühlflüssigkeit, die von dem Kondensator abgegeben wird, im Verlauf einer Trocknungsstufe überwachen.

10. Wasch- und Trockenmaschine oder Geschirrspüler nach den vorhergehenden Ansprüchen, wobei das Reservoir (11) oben auf dem Gehäuse der Waschmaschine angeordnet ist.

11. Wasch- und Trockenmaschine oder Geschirrspüler nach den vorhergehenden Ansprüchen, wobei das Reservoir (11) hinter dem Gehäuse der Waschmaschine angeordnet ist.

12. Wasch- und Trockenmaschine oder Geschirrspüler nach den vorhergehenden Ansprüchen, die/der Mittel zum thermischen Isolieren des Reservoirs beinhaltet.

13. Wasch- und Trockenmaschine oder Geschirrspüler nach den vorhergehenden Ansprüchen, die/der Überlaufmittel (16) beinhaltet. um die überschüssige Flüssigkeit, die zu dem Reservoir (11) geschickt wird, in den Behälter (1) abzulassen.

14. Wasch- und Trockenmaschine oder Geschirrspüler nach Anspruch 13, wobei die Überlaufmittel (26) mit einem Einlaß des Entwässerungsventils (24) oder des Steuerventils (27) verbunden sind, wobei das Entwässerungsventil (24) oder das Steuerventil (27) von einem Verteiler mit zwei Einlässen gebildet ist, wobei der normalerweise offene Einlaß der Verteilers mit den Überlaufmitteln (16) verbunden ist.

## Revendications

1. Machine à laver et à sécher ou lave-vaisselle, comprenant un réservoir de lavage 1 qui est destiné à être rempli d'un liquide à un niveau prédéterminé (A), des moyens (12) destinés à admettre l'eau dans le réservoir, une pompe de drainage (3), et un tuyau (15) destiné à raccorder le réservoir à l'entrée de la pompe, un réservoir (11), disposé au-dessus du niveau prédéterminé (A), destiné à récupérer le liquide dans le réservoir, des moyens de partition d'écoulement (3, 18) raccordés à la sortie de la pompe (3) pour faire passer la sortie d'écoulement par la pompe sélectivement d'une sortie (16) au réservoir (11), une vanne de drain (24, 27) destinée à raccorder le réservoir (11) au réservoir de lavage (1), des dispositifs de séchage (8, 5), un condenseur (4) destiné à la vapeur développée par les dispositifs (8, 5) et des moyens d'alimentation (24, 27, 25, 28) destinés à alimenter le condenseur (4) en un écoulement de refroidissement de condensation pris à partir du réservoir (11), caractérisés en ce que l'écoulement de refroidissement est évacué à partir du condensateur (4) dans le réservoir (1), mélangé à de l'eau condensée et ladite machine à laver et à sécher ou ledit lave-vaisselle comprend, en outre, des moyens de programmation (31) destinés à coordonner l'actionnement des moyens de partition d'écoulement (3, 18), de la pompe (3), de la vanne de drain (24, 27) et desdits moyens d'alimentation (24, 27 , 25 , 28) de manière à alimenter le condenseur en ledit écoulement de refroidissement de condensation pris à partir dudit réservoir (11) et à faire recirculer ledit écoulement de refroidissement mélangé à de l'eau condensée à partir dudit réservoir (1) dans ledit réservoir (11) pour la récupération dans celui-ci et la réutilisation subséquente et ultérieure au cours d'une opération de lavage subséquente.

2. Machine à laver et à sécher ou lave-vaisselle selon la revendication 1, dans lesquels les moyens de partition d'écoulement (3, 18) font passer l'écoulement de sortie de la pompe (3) sélectivement en direction d'une sortie (16), en direction du réservoir (11) ou en direction d'un trajet de recirculation (17, 19, 21) conduisant au réservoir.

3. Machine à laver et à sécher ou lave-vaisselle selon la revendication 2, dans lesquels les moyens de partition d'écoulement (3, 18) comprennent un premier partiteur (3) destiné à faire passer sélectivement l'écoulement de sortie de la pompe (3) en direction de la sortie (16) et du trajet de recirculation (17), et un second partiteur (18) inséré sur le trajet de recirculation (17) pour faire passer sélectivement un écoulement de recirculation en direction du réservoir (11) ou en direction du réservoir (1).

4. Machine à laver et à sécher ou lave-vaisselle selon la revendication 1, dans lesquels les moyens d'alimentation (24, 27, 25, 28) comprennent la vanne de drain (24, 27) et un tuyau d'alimentation (25, 28) conduisant au condenseur (4).

5. Machine à laver et à sécher ou lave-vaisselle selon la revendication 1, dans lesquels les moyens d'alimentation comprennent une vanne de commande (27) en plus de la vanne de drain (24) et un tuyau d'alimentation (28) conduisant au condenseur.

6. Machine à laver et à sécher ou lave-vaisselle selon la revendication 1, comprenant des moyens (33) destinés à détecter la température de l'écoulement de refroidissement, les moyens de programmation (31) complétant le liquide de refroidissement par de l'eau admise vers le tank à partir des moyens d'entrée (12) lorsque la température détectée par les moyens de détection dépasse une température prédéterminée.

7. Machine à laver et à sécher ou lave-vaisselle selon la revendication 6, dans lesquels les moyens de détection de température (33) sont disposés dans la partie inférieure du réservoir.

8. Machine à laver et à sécher ou lave-vaisselle selon les revendications précédentes, comprenant des moyens (32) destinés à détecter le niveau de liquide dans le réservoir de manière à actionner les moyens de programmation (31) pour faire passer les moyens de partition d'écoulement (3) à la sortie de la pompe (3) en direction de la sortie (16) lorsque le niveau de liquide dans le réservoir dépasse une valeur prédéterminée.

9. Machine à laver et à sécher ou lave-vaisselle selon la revendication 6, dans lesquels les moyens de détection (33) contrôlent la température du liquide de lavage dans le réservoir au cours d'une étape de lavage, et la température du liquide de refroidissement issue du condenseur au cours d'une étape de séchage.

10. Machine à laver et à sécher ou lave-vaisselle selon les revendications précédentes, dans lesquels le réservoir (11) est disposé au-dessus du corps de la machine à laver.

11. Machine à laver et à sécher ou lave-vaisselle selon les revendications précédentes, dans lesquels le réservoir (11) est disposé à l'arrière du corps de la machine à laver.

12. Machine à laver et à sécher ou lave-vaisselle selon les revendications précédentes, comprenant des moyens destinés à isoler thermiquement le réservoir.

13. Machine à laver et à sécher ou lave-vaisselle selon les revendications précédentes, comprenant des moyens de trop plein (26) destinés à évacuer le liquide en excès envoyé au réservoir (11) dans le réservoir (1).

14. Machine à laver et à sécher ou lave-vaisselle selon la revendication 13, dans lesquels les moyens de trop plein (26) sont raccordés à une entrée de la vanne de drain (24), ou la vanne de commande (27), la vanne de drain (24) ou de la vanne de commande (27) étant constituée par un partiteur ayant deux entrées, l'entrée normalement ouverte du partiteur étant raccordée aux moyens de trop plein (26).
